Europäisches Patentamt

European Patent Office

Office européen des brevets

(19)

(11) Veröffentlichungsnummer: **0 278 010**
**A1**

## (12) EUROPÄISCHE PATENTANMELDUNG

(21) Anmeldenummer: **86118190.7**

(22) Anmeldetag: **31.12.86**

(51) Int. Cl.4: **A01G 27/00**

(43) Veröffentlichungstag der Anmeldung:
**17.08.88 Patentblatt 88/33**

(84) Benannte Vertragsstaaten:
**AT BE CH DE ES FR GB GR IT LI LU NL SE**

(71) Anmelder: **Block, Hubert K.**
**Othestrasse 67 Postfach 1150**
**D-5275 Bergneustadt(DE)**

(72) Erfinder: **Block, Hubert K.**
**Othestrasse 67 Postfach 1150**
**D-5275 Bergneustadt(DE)**

(54) **Kombinierte Vorrichtung zur Langzeitversorgung von Pflanzen verschiedener Kulturarten.**

(57) Die vorliegende Erfindung betrifft eine kombinierte Vorrichtung zur Langzeitversorgung von Pflanzen verschiedener Kulturarten, die in Behältnissen einstehen. (Erd-, Hydro-und Halbhydrokulturen sollen mit einem großen Vorrat von hochqualitativem Wasser, das im Bereich neben den Wurzelballen angeordnet ist, versorgt werden - bei optimaler Wasserstandsanzeigemöglichkeit.) - Die Erfindungsvorrichtung löst die Problemstellung im wesentlichen durch einen wasserdichten Trenntopf (10, 14,15ª), der mit einem kapillaren Tontopf (7,9) derart ineinander steht, daß ein Teil des Tontopfs den Wurzelballen aufnimmt, und ein weiteres Teil (7b,9ª) den Trenntopf 'überspringt' und bodenseits im Wasser einsteht - wodurch die Pflanze über den permanent feuchten Tontopfschaft (7,9) bewässert wird, bei guter Wurzelbelüftung.-Der Wasserstand ist in einer Variante durch einen Teilkreisförmigen Stab (6ª) zu ersehen, der über einen Schwimmkörper (6b) und einer 'Speiche' (6c) in einem Drehpunkt (6d) gelagert ist. Von dort bewegt sich der Anzeigestab (6ª) je nach dem Wasserstand kreisbogenförmig (6g) flach über dem Substrat/Granulat (11,12).-Ein flexibles Folien-Vliesbehältnis (16) mit u. A. eingeschweißten Aktivkohleteilen (16ª/b) sorgt für eine gute Wasserqualität.

Fig. 1

EP 0 278 010 A1

Bei der Erfindung handelt es sich um eine kombinierte Vorrichtung zur Langzeitversorgung von Pflanzen verschiedener Kulturarten, die in Behältnissen einstehen.

Die Langzeitwässerung von in Behältnissen einstehenden Zierpflanzen - insbesondere die der Erdkultur - bereiten den Menschen seit jeher große Schwierigkeiten. So konnte bisher einer Pflanzen gefährdenden Überversorgung des Erdreichs mit Wasser vornehmlich nur durch eingeplante Wassernachfüllpausen nach entleertem Reservoir einen notwendigen Ausgleich zur überfeuchteten Erde bringen. Dieses betrifft die Konstruktionen der Verwendung mit textilen und schaum-sowie - schwammartigen Kapillarleitern zwischen den Wasser-Reservoiren und dem Erdreich. Auch Diffundier-Töpfe, die begrenzte Mengen Wasser durchlaufen lassen, genügen den Ansprüchen der Pflanzen in ihrer großen Bandbreite des speziellen Wasserverbrauchs in den Wachstums-und Vegetationsruhe-Phasen nicht. So bekommen einige Pflanzen zu viel Wasser und andere zu wenig; wobei durch die heutigen stark torfhaltigen Erden meistens die Überbewässerung das größere Problem ist, und eine fehlende Wurzelbelüftung nach sich zieht. Viele Lösungsvorschläge scheitern, wenn nicht durch eine unzureichende Funktion, so doch an einer schwierigen Herstellbarkeit des Produkts, oder wegen einer zu komplizierten Handhabung der angebotenen Technik bzw. auch wegen eines unzumutbaren Designs des Artikels.

Über die Versorgungsprobleme der Erdkulturen hinaus sind selbst bei den mehr und mehr verbreiteten Hydrokulturen Schwierigkeiten anzutreffen. Bekanntlich benötigen Hydrokultur-Pflanzen in ihrem Granulat viel Feuchtigkeit, aber nur wenig stehendes Wasser - auch hier wegen der notwendigen Wurzelbelüftung. Deshalb werden wasserstandsregulierende Unterdruckprinzip-Tanks angeboten. Diese sind aber ohne Wasserstandsanzeiger konstruiert worden. Und wo sie berücksichtigt wurden, sind sie - wegen des hohen Wasserstandes im Tank oder Reservoirs - unästhetisch lang und können von Kindern leicht abgeknickt werden.

Die europäische Patentanmeldung 86810098.3 beinhaltet einen Wasserstandsanzeiger mit kurzem Sichtteil bei der Verwendung hoher Tanks. Hier sind mehrere (drei) ringförmige Schwimmteile (mit je auch übereinander angeordneten verschiedenfarbigen Röhrchen) auf einen Mittelstab aufgereiht. Die verschieden langen Röhrchen sollen den jeweiligen Wasserstand anzeigen. Es wird bezweifelt, daß dieser Anzeiger dauerhaft arbeitet, weil Nährsalze und große Reibungsflächen in den Röhrchen und zwischen den Schwimmern die notwendige Gleitfähigkeit (und das sich Lösen der Teile) beeinträchtigen.

Das deutsche Gebrauchsmuster G 8332694.4 zeigt in diesem Zusammenhang in der Zeichnung einen wie zuvor genannten langen Wasserstandsanzeiger. Darüber hinaus wird hier ein Tonpflanztopf vorgeschlagen für verschiedene Pflanzenkulturarten. Für Erdkulturen steht der Tontopf (ohne Abzugsloch) tief im Wasser. Damit einerseits das Wasser sich nicht schädigend in den Topf drückt, und andererseits aber die Pflanze ihr notwendiges Wasser erhält, ist hier folgendes ausgedacht worden: Bei der linken Topfhälfte ist der Boden und die Topfschaftwandung bis zur halben Wandstärke außen begrenzt wasserdurchlässig präpariert worden. Bei der rechten Topfhälfte ist die innere halbe Wandstärke begrenzt wasserdurchlässig imprägniert (verdichtet) worden. Je die unimprägnierten Wandungen des Tontopfs sind Kapillar gehalten worden - bis auf den Streifen, wo die linke und die rechte Hälfte der präparierten Flächen aneinanderliegen. Die "topfinnere" kapillare Schaftwandungshälfte (links) ist mit der "topfäußeren" kapillaren Schaftwandungshälfte lediglich über den Stapelrand, und dem an ihn anhängenden besonderen äußeren Distanzrand kapillar verbunden. Die Erfindung sieht vor, daß

a) die kapillaren Schichten der Topfwandung durch ihre Kapillarität das Erdreich ausreichend bewässern und

b) daß die verdichteten/imprägnierten Schichten der Topfwandung so präpariert sind, daß sie auch noch einen Teil Wasser zur Erde diffundieren lassen.

Dem Wunschdenken des Erfinders zum Trotz ist dieser Topf rationell nicht herstellbar. Er fällt auch wegen weiterer Punkte zu den vorgenannten negativen Lösungsvorschlägen (Überfeuchtung und fehlende Wurzelbelüftung).

Die deutsche Offenlegungsschrift 2904187 (Aktenzeichen P 290418 7.0) zeigt eine Art Strumpf, der seitlich über den bepflanzten Tontopf oder Erdwurzelballen gesteckt ist, und sich mit seinem tieferliegenden unteren Ende im Wasser befindet. Der Kunststoff-Filzstrumpf als Manschette soll den höhergelagerten Topf mit Wurzelballen versorgen. Die Probleme sind hier folgende: Einmal besteht die Gefahr der Überwässerung der torfhaltigen, stark saugenden Erden mit der dann auftretenden fehlenden Wurzelbelüftung ($CO_2$ -Austausch). Dann ist der bodenseitige Wasserspiegel dicht am Erdreich gelegen, so daß bei einer kleinen Unachtsamkeit (beim Nachfüllen) der Wasserspiegel bis in die unteren Erdschichten gelangt und die Pflanzen eingehen müssen. Das Hauptproblem ist aber auch hier darin zu sehen, daß pflanzenschädigendes Ungeziefer sich gerne dort in der Erde ansiedelt, wo diese oft und lange zu naß ist und wo die direkte Verbindung von der Erde zum Wasservorrat - wie bei dem gerade beschriebenen Vorschlag (OS) - sehr kurz ist.Einen nahezu brillanten Erfindungsgedanken zeigt das deutsche Gebrauchsmuster GM 1822735. Hier ist ein Pflanztopf mit zusätzlichem Außenschaft vorgeschlagen worden - zur besseren Standfestigkeit des Topfs. Zwischen den beiden Topfschaftwandungen ist eine Wasserauffangschale untergebracht worden. Zu seinem Bedauern hat der Erfinder (Hubert Ermecke) nicht die großen Möglichkeiten seiner Erfindung für die Langzeitbewässerung von vornehmlich Erdkulturpflanzen erkannt.

Die im Handel erhältlichen Ionenaustauscher-Batterien für die Langzeitdüngung sind fest, starr und unflexibel, und deshalb nicht überall zu gebrauchen.

Der Erfindung liegt nun die Aufgabe zugrunde, eine Tank-Pflanztopf-Kombination mit Wasser-standsanzeiger und Versorgungsbatterie als Vor-richtung zur Langzeitbewässerung verschiedener Pflanzenkulturarten - insbesondere der Erdkulturen - zu erstellen; wo das Erdreich ausreichend befeuchtet wird und der Wurzelballen nicht austrocknet; wo die Wurzelbelüftung immer gewährleistet ist, und wo Ungeziefer nicht leicht von der Erde ins Wasser wechseln kann; wo Erdkulturpflanzen in ihren speziellen Pflanztöpfen langzeitversorgend in Hydrogrossbehältnisse zu Hydrokulturpflanzen eingesetzt werden können - ohne Gefahr zu laufen, daß Erd-oder Wurzelsekrete die Hydropflanzen - schädigen; wo Wasserstandsanzeiger in allen Tankarten einzubringen sind und ohne hohen Sichtstab funktionieren; und wo Ionenaustauscher-Batterien praktischer zu handhaben sind - und all die Dinge der gesamten Vorrichtung trotz der großen Aufgabenbandbreite preiswert zu fertigen und gut zu stapeln und zu palettieren sind; und letztendlich wo die einzelnen Vorrichtungsvarianten trotz der vorgegebenen Funktionen designmäßig ansprechend und so vielseitig verwendbar sind.

Die vorliegende Erfindung löst die vorgegebene Aufgabe durch eine "Kombinierte Vorrichtung zur Langzeitversorgung von Pflanzen verschiedener Kulturarten" -die in Behältnissen einstehen - unter der Mitverwendung

a) von kapillaren und unkapillaren Pflanztöpfen,

b) von Unterdruckprinzip-Tanks wie je einem Ring-, Rotations-und Gliedertank,

c) von einem Wasserstandsanzeiger mit Schwimmerteil für die Verwendung innerhalb und außerhalb der Tanks, sowie

d) von einer Wasserverbesserungs-und Nährstoffbatterie nebst Inhalt speziell dadurch, daß

a) kapillare, keramische Pflanzgefäße/Gefäßteile über deren obere Schaft-und Randbereiche mittels bodenseits im Wasser einste-henden Gefäßschaftteilen - unter der Mitverwen-dung von wasserdichten "Pflanzgefäß unterstellten" sogenannten Trenntöpfen - mit den Versorgungselementen (insbesondere Wasser) in direkter kapillarer Verbindung stehen, und dadurch vornehmlich permanent insgesamt befeuchtet werden; sowie daß

b) der Pflanzgefäße umschließende Tank (Unterdruckprinzip) mit Oberrand-Erhöhungen und einer vertieften Oberrand-Fläche sowie Innenschaftausbuchtungen ausgebildet ist, die z. T. mit Keramikgranulat und Aktivkohleteilen aufgefüllt sind; und daß ein Unterdruckprinzip-Rotationstank (ebenfalls) mit einer quer bis längs angeordneten Ausbuchtung nebst transparentem, bogenförmigen Sichtteil ausgebildet ist, und exzentrisch - zur exzentrischen Rotation - gelagert ist; als auch daß

c) die Vorrichtung - insbesondere die Pflanzgefäße und Unterdruckprinzip-Tanks - mit (je) ein-em sich bogenförmig bewegenden Wasserstand-sanzeiger bestückt ist; und daß der Anzeiger über einen Drehpunkt nebst Quer-bzw. Längsachse und dem Verbindungsteil zum Schwimmer gelagert ist - und dadurch bogenförmig/teilkreisförmig - drehbar beweglich ist - ; und wie folgt, daß

d) eine Folien-und eine Vlieslage (Kunststoff) rundum zu einem flexiblen Kleinbehältnis verschweißt ist und mit einer Füllung aus Düngestoffen und Wasserverbesserern (Ionenaustauscher - Feingranulat, Gips) - so auch Aktivkohleteilen in Staub-und Granulatform wie auch solche Ascheteile - aufgefüllt ist, zur ganzheitlichen Einbringung in die Wasserbereiche der Vorrichtung.

Die ganzheitliche Vorrichtung in seinen einzel-nen Teilausführungen: Tank, Pflanzgefäß, Wasser-standsanzeiger und Versorgungsbatterie gewährleistet die kombinierte Verwendung für die Erdkulturen einschließlich Bonsai - und der Hydrokulturen einschließlich der Heterokultur (Halbhydrokultur).

In den Zeichnungen ist die Erfindung beispielsweise dargestellt. Es zeigt die

Fig. 1 eine Schnitt-Darstellung der Vorrichtung mit einem die Pflanzgefäßgruppe umschließenden Tank nebst Wasserstandsanzeiger;

Fig. 2ᵃ die Schnitt-Darstellung durch die Vorrichtung als ein Teil eines Großgefäßes mit Pflanzgefäßgruppe (links) und Torsionstank (rechts) nebst Wasserstandsanzeiger;

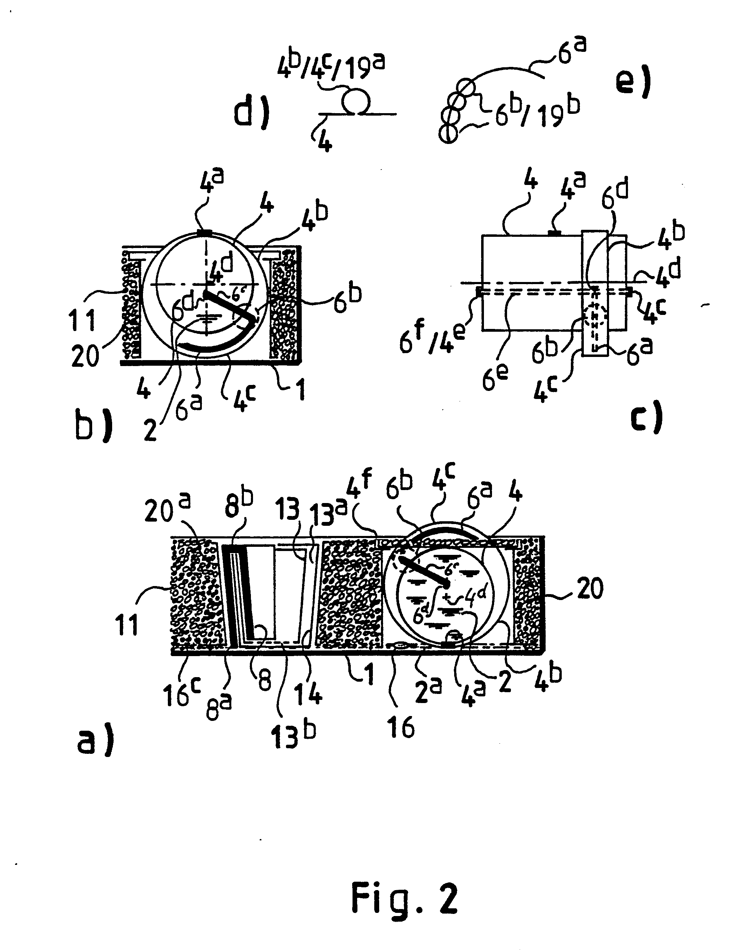

Fig. 2ᵇ die Teilschnitt-Darstellung durch den Torsionstank in der Wasser-Einfüll-Lage (Der Tank beinhaltet hier wenig Wasser und der Anzeiger ist nach unten ausgerichtet. Ein notwendiger Schwimmer-Begrenzer/Schwimmer-Anschlag ist hier zeichnerich nicht vorgesehen.);

Fig. 2ᶜ eine Seitenansicht des Torsionstanks (nach Fig. 2ᵇ) mit Anzeiger und zum Tank exzentri-scher Torsionslagerung nebst entsprechender Ach-se für den Anzeiger;

Fig. 2$^d$ eine Teilansicht des Tanks entsprechend Fig. 2$^c$;

Fig. 2$^e$ eine Ansicht auf eine Variante des kompletten beweglichen Teils des Wasserstandsanzeigers ( $\triangleq$ Fig. 2$^a$);

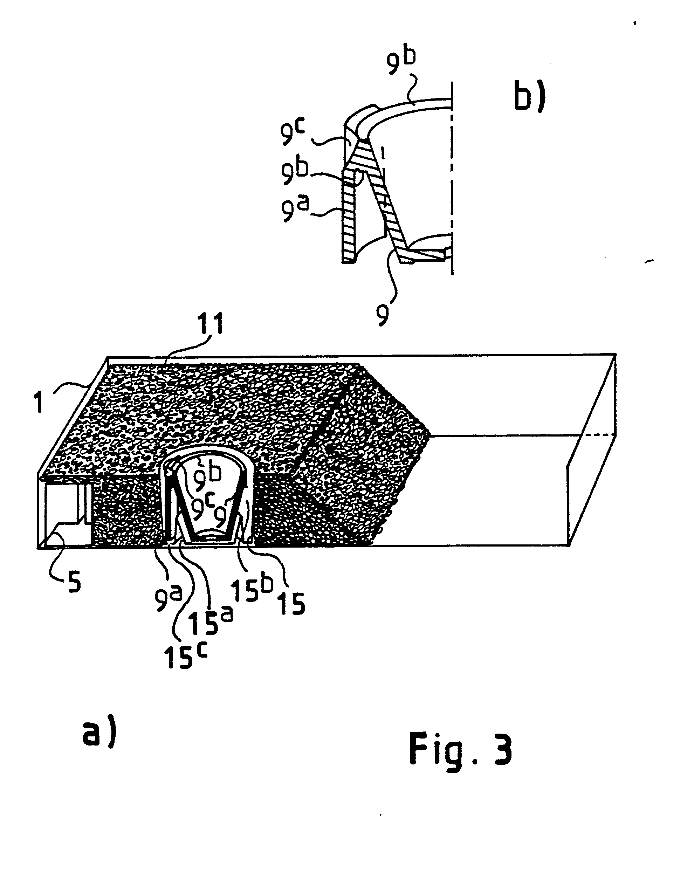

Fig. 3$^a$ die perspektivische Teildarstellung (mit einem Schnitt im Vorderbereich durch die Vorrichtung) als Großbehältnis mit verdecktem Spezialtank - gezeichnet ohne Wasserstandsanzeiger - (links) und Pflanzgefäßgruppe (halblinks);

Fig. 3$^b$ die perspektivische Teildarstellung (im Schnitt) des kapillaren Pflanztopfs mit Außenschaft-Teil (Randschaftzapfen/9$^a$).

Die Positionen zeigen:

1 das Großbehältnis;

2 das Wasser (Nährflüssigkeit) im Tank;

2$^a$ das Wasser (Nährflüssigkeit) im Bereich des Großgefäßbodens und der Pflanzgefäßgruppen;

3 den die Pflanzgefäßgruppen umschließenden Tank (Ringtank/Quadrattank);

3$^a$ die Oberrandfläche des Tanks entsprechend Pos. 3;

3$^b$ die äußere - obere Tankrand-Erhöhung;

3$^c$ die innere - obere Tankrand-Erhöhung;

3$^d$ das transparente Sichtröhrchen für die Wasseranzeige;

3$^e$ die Absatz;

4 den Torsions-Tank;

4$^a$ den Wasser-Einfüllbereich;

4$^b$ der den Torsions-Tank exzentrisch umlaufende Tankbereich für den Wasserstandsanzeiger;

4$^c$ (entsprechend Pos. 4b) der transparente Bereich;

4$^d$ die (unbenutzte) Mittelachse des Haupttankschafts;

4$^e$ die Lagerzapfen für die Drehpunkte des Tanks und der Achswelle für den Wasserstandsanzeiger;

4$^f$ das Deckel-Element (mit Aussparung für den Wasserstandsanzeiger-Sichtbereich/4$^c$,6$^a$) über dem Torsionstank;

5 den Gliedertank;

6$^a$ das Sichtteil des Wasserstandsanzeiger (es kann als gekrümmter/teilkreisförmiger Stab ausgebildet sein - wie gezeichnet - oder als flacher bzw. balliger Scheibenkörper);

6$^b$ den Schwimmkörper;

6$^c$ die Speichenverbindung zwischen dem Drehpunkt und dem Schwimmer;

6$^d$ den Drehpunkt des Wasserstandanzeigers;

6$^e$ die Drehachse (Achsenwelle/Achsenstab) des Wasserstandsanzeigers;

6$^f$ die Lagerstellen für die Achswelle bzw. Traverse (6$^e$) des Anzeigers;

6$^g$ die Bewegungsrichtung des Wasserstandsanzeiger-Sichtteils;

6$^h$ die Bewegungsrichtung des Schwimmers;

7 den kapillaren Keramik-Pflanztopf (Normalform);

7$^a$ den Freischnitt durch den Pflanztopfboden (am Rand) und durch die beiden gegenüberliegenden Schaftwandungen des Tontopfs;

7$^b$ den kleinen Topfschaftbereich auf der Topfseite des Freischnitts;

7$^c$ den Stapelrand des Kapillartopfs;

7$^d$ eine Aussparung in dem Tontopf-Ringfuß für eine gute - bessere - Wurzelbelüftung ($CO_2$-Austausch);

7$^e$ den kapillaren Kontaktbereich des Tontopfs für das feuchte Kapillar-Granulat (11$^a$);

8 die innere Schafthälfte der kapillaren Keramikbrücke;

8$^a$ die äußere Schafthälfte der kapillaren Tonbrücke;

8$^b$ den Oberbereich der Kapillarbrücke;

9 den kapillaren Pflanztopf (mit Randschaftzapfen);

9$^a$ den kapillaren Pflanztopf-Randschaftzapfen;

9$^b$ den Oberrandbereich/Stapelrand des kapillaren Keramiktopfs mit Randschaftzapfen;

9c die Wassereinfüll-Freistelle (im Oberrandbereich/oberer Randschaftzapfen-Ansatz);

10 den Trenntopf (Kunststoff, wasserdicht) in diesem Bereich außerhalb des Tontopfs(7);

10$^a$ den Trenntopf im Bereich innerhalb des Tontopfs (7);

10$^b$ den Trenntopf in den Bereichen, wo der Tontopf geschlitzt ist (7$^a$), und wo der Trenntopf durch die Schlitze (7$^a$) eingesteckt wurde;

10$^c$ den Bereich zwischen Tontopf (7) und Trenntopf - für die Wurzelbelüftung ($CO_2$-Austausch);

11 den Blähton/Tongranulat;

11$^a$ das feuchte Kapillargranulat (Ton);

12 die Humuserde;

13 den thermoplastischen Pflanztopf mit Bodendurchbrüchen für die Variante mit der Keramikbrücke (8);

13$^a$ den Zwischenraum zwischen dem Pflanztopf ( $\triangleq$ Pos. 13) und dem Trenntopf (Pos. 14) zur Wurzelbelüftung ($CO_2$-Austausch);

13$^b$ die Bodendurchbrüche im Plastikpflanztopf;

14 den Trenntopf (Plastik, wasserdicht) der Variante mit der Keramikbrücke (8,8$^a$);

15 den kombinierten Trenntopf die Variante mit dem kapillaren Randschaftzapfen-Pflanztopf (9), hier auch als Schutz-Schaft (außen), der das Nachfallen des Blähtons verhindern soll beim Austauschen des Pflanztopfs (9);

15$^a$ den wasserdichten Bereich (Schaft und Boden) des eigentlichen Trenntopfteils (Bezeichnung "Trenntopf" deshalb, weil er den

äußeren topfumspülenden Wasserbereich/2ª vom inneren wurzelbelüftungsnotwendigen Trockenbereich - Pflanztopf/9,8/13,7 - trennt);

15ᵇ den Freiraumlereich zwischen den Gefäßen (9,15) zur Wurzelbelüftung;

15ᶜ den (die) Durchbruch (Durchbrüche) im äußeren Randboden des kombinierten Trenntopfs;

16 die flexible - flache - Nährstoff-und Wasserverbesserungs-Batterie vornehmlich bestehend aus einer oberen Dichtfolie und einem unterem Kunststoff-Vlies (ggf. beide Seiten Vlies), deren Enden rundum miteinander verschweißt sind;

16ª/ᵇden Inhalt der flexiblen Batterie bestehend aus Aktivkohle (Granulat und/oder Pulver) und den üblichen Stoffen (Ionenaustauscher, Gips);

16ᶜ die Aktivkohlebeigaben außerhalb der vorgesehenen Batterien (16);

17 einen Wassereinfüll-Trichter;

17ª den langen Schaft des Einfüll-Teils;

18 die andeutungsweise Darstellung des Bereichs von Schlitzdurchbrüchen im oberen Tontopfbereich für Halbhydrokulturen (Heterokulturen);

19ª der den Torsionstank (≙ 4ᵇ/4ᶜ) umlaufende Ringraum;

19ᵇ die (den) im Bogen angeordneten Schwimmkörper (diese Variante arbeitet nur mit theoretischem Drehpunkt und ohne Speichenverbindung/≙ 6ᶜ);

20 die Abschottungswandung für den Tank (4);

20ª die Abschottungswandung für die Topfgruppe (Fig. 2ª).

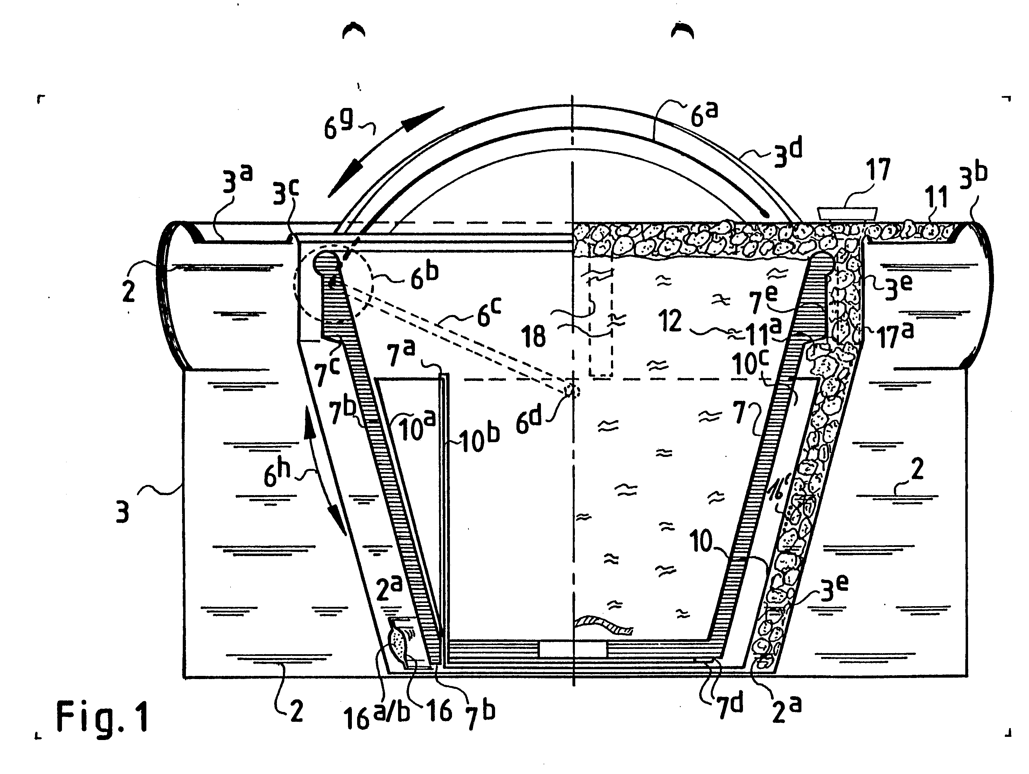

Betreffs der Unterdruckprinzip-Tanks (3,5) wurde zeichnerisch nur auf das Wesentliche eingegangen. (Da gibt es gute Wassereinfüllmechanismen wie z. B. eine Art Siffon-Prinzip/DE-OS 3117226 A 1). Schwierig war die Sache mit dem Torsions-Tank (Fig. 2) und dem integrierten Wasserstandsanzeiger (6ª). Wie in den vereinfachten Figuren 2ª bis 2ᶜ zu sehen ist, wird der Tank (4) exzentrisch (4ᵉ zu 4ᵈ/Fig. 2ᶜ) gelagert. Zum Auffüllen (Fig. 2ᵇ) wird der Tank (4) "hochgeschwenkt" also quasi 'angehoben' -, so daß die Einfüllöffnung (4ª) nach oben gelangt (Fig. 2ᵇ⁺ᶜ) und das Wasserstandsanzeige-Sichtteil (4ᶜ) unten genügend Platz hat. - Für den gebogenen Anzeige-Sichtstab (6ª) und falls nötig für den Schwimmer (6ᵇ) erfährt der Torsionstank (4) eine zu dessen Zylinderschaft ebenfalls exzentrische Ausbuchtung (4ᵇ,4ᶜ), die eckig sein kann (Fig. 2ᶜ) als auch rund (Fig. 2ᵈ, Pos. 19ª). In der Höhe der Ausbuchtung (4ᵇ, 4ᶜ/Fig. 2ᶜ) befindet sich die "Speiche" (6ᶜ/Fig. 2ᵇ) - als Verbindungsteil zwischen Schwimmer (6ᵇ) und Querachse (6ᵉ/Fig. 2ᶜ), deren Seiten wiederum in dem Lager-und Torsionspunkten (4ᵉ/Fig. 2ᶜ) der Tankseiten (≙ 4) enden. Notwendige Anschläge/Begrenzungen für den Wasserstandsanzeiger (6) wurden der Einfachheit halber nicht eingezeichnet. In der Fig. 2ª ist der Tank (4) in der Funktionslage gefüllt mit Wasser zu sehen. Der Klarsichtbereich der Ausbuchtung (4ᶜ) ragt aus dem Abdecktablett (4ᶠ) heraus und der teilkreisförmige Anzeigestab (6ª) ist über die ganze Länge der transparenten Wölbung (4ᶜ) zu sehen - zeigt also "voll" an. Sinkt der Wasserspiegel (2) im Tank (4) durch Verbrauch und Verdunstung der in den Pflanzgefäßen (7/10;8/13;9/15) einstehenden Blumen ab, bewegt sich der Schwimmer (6ᵇ) mit dem Anzeigestab (6ª) ebenfalls abwärts - wie in der Fig. 1 und den Positionen 6⁹ und 6ʰ dargestellt ist. Bei halbentleertem Tank zeigt sich der Anzeigestab in der (linken) Hälfte des Wölbungs-Sichtraumes (4ᶜ). Leert sich der Tank vollends, so verschwindet der Anzeigestab ganz aus dem Sichtfeld - egal welche "Bodenwasserhöhe" (2ª) mit dem Torsionstank (4) nach dessen bodenseitigen Auslaufstelle/Einfüllstelle (4ª) eingeregelt wurde. - Ein Vorteil des Wasserstandsanzeigers im Unterdrucktank liegt - nebenbei gesagt - auch darin, daß der sonst übliche Stabwasserstandsanzeiger in Außenbzw. Großbehältnissen (1,3) entfallen und eingespart werden kann - was den Tank lukrativer werden läßt. - Der Anzeiger (6) kann als Stabgebilde (6ª,6ᶜ) oder als Scheibe ausgeführt sein. Als Scheibenvariante kann der flächenhafte Grundkörper plan oder ballig ausgebildet sein. Ebenso kann der Anzeiger (6) als Stabgebilde (6ª,6ᶜ) plan - in einer Ebene ausgebildet sein - oder auch "ballig". Auch die Achse (6ᵉ) kann für weitere Möglichkeiten "verkröpft" (von der geraden Achse abweichend) ausgebildet sein.

Das Tank-Abdecktablett (4ᶠ) ist notwendigerweise an der Stelle des transparenten Sichtkörpers (4ᶜ) durchbrochen. - Der Anzeiger (6) kann auch ohne Verbindungsteil (6ᶜ) vom Schwimmer (6ᵇ) zur Achse (6ᵉ/6ᵈ) ausgebildet sein. Für diesen Zweck ist der Schwimmer (6ᵇ/19ᵇ Fig. 2ᵉ) länglich - 'gebogen' ausgebildet, und gleitet in einem vornehmlich runden Sicht-Tunnel (4ᵇ/4ᶜ, 19ª -Fig. 2ᵈ). - Wasserstandsanzeiger mit irgendwelchen mechanischen, beweglichen und/oder rotierenden Teilen - die u. A. einen Übersetzungsmechanismus darstellen (insbesondere für einen kurzen Sichtanzeige-Hub) - sind ebenfalls Gegenstand dieser Erfindung. - Die Abschottungswandungen (20) des Tanks können an einer Seite (z. B. rechts) - anders als gezeichnet - bis dicht an die Tankwandung (4) herangeführt werden - wenn die Abschottungswandung mit einer Ausbuchtung (rechts) für die Tankausbuchtung (4ᵇ/4ᶜ) angepasst ist. Allerdings kann dann der Rotationstank (4) nur in eine Richtung um 180° geschwenkt werden - was aber zum Auffüllen reicht. - Der Abstand vom Tank (4) zur anderen Abschottungswandung (links) muß im Abstand bleiben - wie gekennzeichnet. Das bringt aber den Vorteil, daß hier die Versorgungsbatterie (16) leicht ausgetauscht werden kann - und auch Ionenaustauscher-Feingranulat oder Aktivkohleteile (16ᶜ) leicht unterzubringen sind - oder auch abzusaugen sind (wenn der übliche Wasserstandsanzeiger mit entsprechenden Ver-und Entsorgungsschacht eingespart wird durch den Tank/4).

In der Fig. 1 ist das transparente Anzeiger-Sichtteil (3ᵈ) beispielsweise als teilkreisförmiges Rohrelement ausgebildet worden. Die weiteren Besonderheiten an der Vorrichtungsvariante (Fig. 1) sind die Oberranderhöhungen (3ᵇ,3ᶜ) mit der zwischen ihnen liegenden, abgesenkten Oberwandung (3ᵃ). Hier kann dekorativ ein mittlerer Blähton (11) aufgestreut werden. - Des weiteren ist diese Vorrichtungsvariante (3) im Bereich der Innenschaftwandung mit wenigen Ausbuchtungen (3ᵉ) ausgebildet, die von oben bis vornehmlich ganz nach unten gereichen. Das Hereinstellen der Pflanzgefäßgruppen (7,10) wird damit erleichtert, weil die Finger in den oberen Ausbuchtungsbereichen (3ᵉ) Platz finden. Auch Tongranulat (11ᵃ) mittlerer Dicke und Aktivkohlteile (16ᶜ) finden in den Ausbuchtungen Platz, wo es (11ᵃ) in den Bereichen neben den Ausbuchtungen von oben nicht hereinfallen kann. Das Tongranulat (11ᵃ) dient der Wasseraufbereitung (Einbringung von Luftsauerstoff in das kapillarmäßig aufsteigende Wasser) und der Befeuchtung des Tontopf-Oberbereichs (7ᵉ). In den verbleibenden Spaltbereichen zwischen dem Tank (3) und der Pflanztopfgruppe (7,10) kann leicht die flexible Versorgungsbatterie (16) ganzheitlich eingebracht werden. Ein Trichterelement (17) zum separaten Einfüllen von Wasser (2ᵃ) paßt auch in die Ausbuchtungen (3ᵉ). Der Trichter (17) kann (und soll gelegentlich) bei der Verwendung von einem normalen Stabwasserstandsanzeiger (wenn kein Tank/3 benutzt wird) über diesen gesteckt werden.

Alle üblichen Unterdruckprinzip-Tanks können mit dem Schwenkwasserstandsanzeiger (6) bestückt werden. Deshalb wurde er in der Fig. 3 (im Gliedertank/5) nicht nochmal eingezeichnet.

Der kapillare Pflanztopf (9) in der Fig. 3 ist mit einer Art Griff (9ᵃ) ausgebildet. Dieser Randschaftzapfen steht außen im Wasser - wogegen der restliche Pflanztopf (9) im Trockenen steht, durch den inneren - wasserdichten Trenntopfbereich (15ᵃ). - Die hochkapillaren Wandungen des Versorgungstopfs (9,9ᵃ) werden durch ihre Kapillarität über den Randschaftzapfen (9ᵃ) permanent feuchtgehalten, so daß der Erdwurzelballen die Feuchtigkeit übernehmen kann und nicht austrocknet.

Die Pflanze ist somit gut versorgt - bei gleichzeitig guter Wurzelbelüftung; denn der Pflanztopf (9) steht selbst ja im Trockenen. Der mit dem Pflanztopf-Stapelrand versinterte zusätzliche Außenschaft (≙ 9ᵃ) kann rundumlaufend geschlossen ausgebildet sein. Besser stapelbar ist jedoch die Variante mit dem Randschaftzapfen (9ᵃ). Entspricht er bei Normtöpfen etwa 1/5 des oberen Topfumfangs (9ᵇ), dann lassen sich die Töpfe (9) leicht ineinander stellen unter der Beachtung, daß die Randschaftzapfen (Außenschaftteile/9ᵃ) um den Topfstapel aneinanderliegend angeordnet sind. Die Stapelrandhöhe entspricht in der Regel den fünften Teil der Pflanztopfhöhe. Eine kleine Ausbuchtung (9ᶜ) im Bereich oberhalb des Randschaftzapfens (9ᵃ) ist gelegentlich von Vorteil (zum Einfüllen von Wasser bei der Verwendung der Topfgruppe (9,15ᵃ/15) im normalen Übertopf). - Der Trenntopf (15) hat in der Variante der Fig. 3 die Funktion einer "Austauschmanschette" - daß das Granulat (11) nicht nachrollt -, und die Funktion als "Trennelement" (15ᵃ), wo er das Wasser vom Pflanztopf (9) abhält. Wie in der Zeichnung (Fig. 3) zu sehen ist, hat der "Trenntopf" einen inneren kleinen Doppelschaft (≙ 15ᵃ) - so daß eine Außenrille vorhanden ist (mit Bodendurchbruch/15ᶜ) und einen wasserdichten inneren Topfbereich (15ᵃ). Außen steht das Randschaftelement (9ᵃ) im Wasser, innen steht der Topf mit der Erde im trockenen Bereich (9ᵃ).

Gegen die Topfkombination (9/15) in der Fig. 3 nimmt sich die Variante (8/13/13ᵃ) in der Fig. 2ᵃ- was den kapillaren Keramikteil (8/8ᵃ) anbetrifft - recht einfach aus. Zwei Kunststofftöpfe - der äußere wasserdichte Trenntopf (14) und der innere Pflanztopf (13) mit Bodendurchbrüchen (13ᵇ) - sind mit zwei oben versinterten/verbundenen (8ᵇ) kapillaren Ton-Teilschaftwandungen (innen 8, außen 8ᵃ) überspannt worden. Die Funktion ist wie der bei Fig. 3ᵇ gegeben. Der Vorteil liegt darin daß die Kunststoffpflanztöpfe (13,14) mit günstigeren Flankenwinkel der Schäfte gefertigt werden können für eine engere Stapelweise mehrerer Töpfe und für einen größeren Erdinhalt der Plastiktöpfe (13,14). Die Keramikbrücken (8,8ᵃ,8ᵇ) selbst lassen sich auch gut stapeln.-Der Wasser-und Nährstoffetransport durch die Schaftwandungen (8,8ᵃ) in das Erdreich ist durch Einbringen von Holzmehl in die ursprüngliche Tonmasse regelbar, daß eine ausreichende Befeuchtung der Erde erzielt wird. Die Wurzelbelüftung ist durch die Pflanztopfbodendurchbrüche (13ᵇ) und dem Luftspalt (13ᵃ) zwischen den Plastiktöpfen (13,14) gesichert. - Obwohl Pflanztöpfe mit im Bodenbereich einem größeren Wurzelvolumen wie in Fig. 2 (13,14) einerseits gerade deshalb von Vorteil sind, so sind es andererseits auch unten enge Pflanztöpfe, wie sie in der Fig. 3ᵃ und Fig. 3ᵇ(pos 9) und in der Fig. 1 (7,10) dargestellt sind - letztere werden abschließend beschrieben-. Der Grund ist ein gewisser Bonsai-Effekt, den diese Töpfe erzeugen - wegen der Wurzelraum-Enge. Die Pflanzen sind in den Töpfen gesund, aber sie wachsen etwas langsamer und brauchen nicht so oft umgetopft zu werden.

Das Besondere an der Pflanztopf-Variante in der Fig. 1 (Pos. 7 und 10) liegt darin, daß der kapillare Topf (7) die Form eines üblichen Tontopfs hat - also problemlos auf der rotierenden 'Topfpresse' gefertigt werden kann ohne zusätzliche Werkzeugkosten. Und es kann die Topfgruppe (7,10) - gegenüber der Topfgruppe in der Fig. 1$^a$ und Fig. 1$^b$ (Pos. 9 und 15) - auch in kegelstumpfförmige Übertöpfe bzw. Ringtanks (3) enger Innenschaftwandungen eingestellt werden. - Der Tontopf wird also im äußeren Bodenbereich eingeschnitten, und weiter vornehmlich winkelig durch beide gegenüberliegende Topfschäfte hindurch bis in den Bereich unterhalb des Stapelrandes (7$^c$) - so daß ein schmaler Spalt (7$^a$) entstanden ist, der den großen Topfschaftbereich (7) von einem kleinen (7$^b$) trennt. - Ein speziell gefertigter, wasserdichter Trenntopf aus Kunststoff (10) ist so gefertigt worden, daß er durch den Spalt (7$^a$) gesteckt wird, bis zu dessen oberen Enden. Der Trenntopf (10) liegt nun an der einen Seite (links, Fig. 1, Pos. 10$^a$) innen vor der Tontopfschaftwandung (7$^b$) an, und er befindet sich rechts hinter den Einschnittseiten ( $\triangleq$ 7$^a$) mit berücksichtigtem Atstand (10$^c$) außerhalb des großen Tontopfschafts. - Stellt man diese Topfgruppe (7,10) nun in das bodenseits mit Wasser (2,2$^a$) gefüllte Behältnis (3), dann steht der Hauptteil des Tontopfs (7) im trockenen Bereich (10$^c$), und nur ein kleiner Schaftbereich (7$^b$) steht (permanent) im Wasser - von wo aus sich das Wasser physikalisch durch die Kapillarität des Tontopfs (7) über den Stapelrandbereich (7$^c$) zur gesamten Tontopfwandung (10) ausbreitet und den Wurzelballen (12) befeuchtet und ein Austrocknen desselben (12) verhindert. Durch den physikalischen Osmose-Prozeß und Zellendiffundierung gelangt die Feuchtigkeit in die Pflanzenzellen. - Die Wurzelbelüftung ($CO_2$-Austausch) ist durch das übliche Abzugsloch, einem Freibereich im Standring des Topfs (7$^d$) und dem Freiraum (10$^c$) zwischen den Töpfen (7,10) gesichert. - Gegenüber dem kleinen Randschaft (7$^b$) - (rechts in Fig. 1) - soll der Trenntopf (10) eine Einbuchtung erhalten, so daß hier die Wandung (10) "abstützend" am Tontopfschaft (7) anliegt - um über die Bodenwandung ( $\triangleq$ 10) den schmalen Tontopfschaft (7$^b$) durch eventuell intensive Wurzelausbreitungskraft nicht abbrechen zu lassen.

Durch den in Fig. 1 dargestellten Oberranddurchbruch (18) soll angedeutet werden, wie die Gefäße für die Heterokultur (Halbhydrokultur) zu verwenden sind. - Fur die Hydrokultur sind die Durchbrüche im untern Bereich -der Gefäße (10,13,14) vorgesehen.

Die Merkmale der Gefäßvarianten (7$^b$,8$^a$,9$^a$,9$^c$,7$^a$,10, 10$^a$,10$^b$,15,15$^a$ usw.) sind untereinander austauschbar und je an einer Gefäßgruppe (z. B. für Bonsaischalen - oder längliche "Balkonbehältnisse") in mehrfacher Teilgestaltung anzuwenden.

Erdkulturblumen können durch die Gefäßgruppen (7,10;8, 13,14;9,15) in Hydro-Großbehältnisse (1) zu Hydropflanzen ( $\triangleq$ Fig. 3a) problemlos eingebracht werden, ohne daß Erd-oder Wurzelsekrete zu den Hydrokulturpflanzen gelangen können. Erdkulturpflanzen werden ideal versorgt - bei guter Wurzelbelüftungsmöglichkeit zu allen Versorgungszeiten. Die Versorgungsbatterie ist handlich, flexibel und preiswert durch die verschweißte Vlies-und Folienlage (16$^{a/b}$). Ihr Inhalt, u. A. mit Aktivkohleteilen (16$^{a/b}$ bestückt (wie auch mit Spezialasche), sorgt wie auch das Tongranulat (11$^a$)-nebst weiteren Granulatbeigaben (16$^c$) für ein frisches, sauerstoffhaltiges, Fäulnisbakterien eingeschränktes Wasser. - Die Wasserstandsanzeige - für jeden Tank verwendbar - ist gut ablesbar geregelt - in flachem Design. - Ungeziefer - kleine, wurzelschädigende Erdtiere - haben nicht die Möglichkeit, sich anzusiedeln im (überfeuchteten) Wurzelballen (12); und es ist für sie kein direkter Zugang (kurzer Weg) zum Wasser (2$^a$) gegeben. - Das alles war bisher nicht, oder nur schwierig möglich. - Eine gute Herstellbarkeit und Stapelbarkeit der kombinierten Vorrichtung ist gegeben. Die Erfindungsaufgabe darf als gelöst bezeichnet werden.

**Ansprüche**

1. Kombinierte Vorrichtung zur Langzeitversorgung von Pflanzen verschiedener Kulturarten - die in Behältnissen einstehen - unter der Mitverwendung

a) von Kapillaren und unkapillaren Pflanztöpfen,

b) von Unterdruckprinzip-Tanks wie je einem Ring-, Rotations-und Gliedertank,

c) einem Wasserstandsanzeiger mit Schwimmerteil für die Verwendung innerhalb und außerhalb der Tanks, sowie

d) einer Wasserverbesserungs-und Nährstoffbatterie nebst Inhalt, dadurch gekennzeichnet, daß

a) kapillare, keramische Pflanzgefäße/Gefäßteile (7,8,9) über (Keramikgefüge) deren obere Schaft/Randbereiche (7$^c$,7$^a$,8$^b$,9$^b$) mittels bodenseits im Wasser (2$^a$) einstehenden Gefäßschaft-Teilen (7$^b$, 8$^a$, 9$^a$) - unter Mitverwendung von wasserdichten "Pflanzgefäß unterstellten- ( $\triangleq$ 7,8,9)" Trenntöpfen (10,14,15$^a$)-mit den Versorgungselementen (2$^a$, 16$^{a/b}$) in direkter (Keramikgefüge) kapillarer Verbindung stehen, und dadurch vornehmlich permanent insgesamt (7,8,9) befeuchtet werden; - sowie dadurch gekennzeichnet, daß

b) der Pflanzgefäße (7,10;8,13,14;9,15,15ᵃ) umschliessende (Fig. 1) Tank/Unterdruckprinzip-Tank (3) mit Oberrand-Erhöhungen (3ᵇ,3ᶜ) und einer vertieftenOberrand-Fläche (3ᵃ) sowie Innenschaft-Ausbuchtungen (3ᵉ) ausgebildet ist, die (3ᵃ,3ᵉ) z. T. mit Keramikgranulat (3ᵃ △ 11) und Aktivkohleteilen (3ᵉ △11ᵃ + 16ᶜ) aufgefüllt sind; und daß der Unterdruckprinzip - Rotationstank (4) mit einer quer (4ᵇ,4ᶜ,19ᵃ) bis längs angeordneten Ausbuchtung (4ᶜ,19ᵃ) nebst transparenten, bogenförmigen Sichtteil (4ᶜ,19ᵃ) ausgebildet ist, und exzentrisch (4ᵉzu 4ᵈ) gelagert ist; - als auch dadurch gekennzeichnet, daß

c) die Vorrichtung (Fig. 1 - 3) - insbesondere die Pflanzgefäße (7,10;8,13,14;9,15,15ᵃ) und Unterdruckprinzip-Tanks (3,4,5) - mit je einem sich irgendwo bogenförmig bewegenden (6ᵍ,6ʰ) Wasserstandsanzeiger (6ᵃ -6ᵈ) bestückt ist; ergo daß der Anzeiger (6ᵃ -6ᵈ) über mindestens einen Drehpunkt (6ᵈ,6ᵉ,4ᵉ) nebst Quer- bzw. Längsachse (6ᵉ) und dem Verbindungsteil (6ᶜ) zum Schwimmer (6ᵇ) gelagert ist, und daß dadurch irgendwo etwas bogenförmig/teilkreisförmig (6ᵍ, 6ʰ) - drehbarbeweglich ist;

und wie folgt dadurch gekennzeichnet, daß

d) eine Folien-und eine Vlieslage (Kunststoff) rundum zu einem flexiblen Kleinbehältnis (16) verbunden/verschweißt ist und mit einer Füllung aus Düngestoffen und Wasserverbesserern (Ionenaustauscher-Feingranulat, Gips) - so auch Aktivkohleteilen in Staub-und Granulatform und auch solchen Ascheteilen - aufgefüllt (16ᵃ/ᵇ) ist, zur ganzheitlichen Einbringung in die Wasserbereiche (2,2ᵃ).

2. Kombinierte Vorrichtung nach dem Anspruch 1, dadurch gekennzeichnet, daß das den Rotationstank/Torsionstank (4) abdeckende Element (4ᶠ) mit einem Durchbruch in der Form des Wasserstandsanzeige-Sichtteils (4ᶜ,6ᵃ) ausgebildet ist.

3. Kombinierte Vorrichtung nach den Ansprüchen 1 und 2, dadurch gekennzeichnet, daß die Tankabdeckung (4ᶠ) aus zwei Teilen besteht.

4. Kombinierte Vorrichtung nach den Ansprüchen 1 und 2, dadurch gekennzeichnet, daß das Wasserstandsanzeige-Klarsichtteil (3ᵈ,4ᶜ) als gebogenes Rohrelement (3ᵈ) und alternativ als - schmales, rundes Kuppelelement (4ᶜ) ausgebildet ist, deren Elemente (3ᵈ,4ᶜ) regenbogenförmig aus (und über) dem Granulat (11) hervortreten (und herüberragen).

5. Kombinierte Vorrichtung nach dem Anspruch 1, dadurch gekennzeichnet, daß das Trenngefäß - (10) im Abstand (10ᶜ) zum inneren Kapillargefäß -

(7) angeordnet ist, und daß es (10ᵃ) ab dem - schmalen Freischnitt (7ᵃ) innen an der Kapillargefäß-Schaftwand (7ᵇ) anliegend verläuft durch den Freischnitt (7ᵃ) gereichend (10ᵇ).

6. Kombinierte Vorrichtung nach den Ansprüchen 1 und 5, dadurch gekennzeichnet, daß die Gefäße (7,10) je an mehr als einer Stelle (7ᵃ,10ᵇ;7ᵇ,10ᵃ) ineinandergreifend ausgebildet sind und je insbesondere die Gefäße (7,10) so als Schalen ausgebildet sind.

7. Kombinierte Vorrichtung nach den Ansprüchen 1 und 6, dadurch gekennzeichnet, daß die kapillaren Gefäße (7,9) im Ringfußbereich/Standfußbereich mit mindestens einer Freistelle (7ᵈ) ausgebildet sind.

8. Kombinierte Vorrichtung nach dem Anspruch 1, dadurch gekennzeichnet, daß das wasserführende Pflanzgefäß (7,9) lediglich als einteilige Kapillarbrücke (8) mit Innen-(8) und Außenschaftteil (8ᵃ), sowie einer über die Topfränder und -schäfte (13,14) gereichenden Oberverbindung (8ᵇ)

9. Kombinierte Vorrichtung nach dem Anspruch 1 und teilweise nach dem Anspruch 5, dadurch gekennzeichnet, daß der kapillare Pflanztopf (9) im Stapelrand-bzw. Seitenschaftbereich mit einem abfallenden, rundumlaufenden Zusatzschaft (9ᵃ) ausgebildet ist, der außerhalb des wasserdichten Trenntopfteils (15ᵃ) im Bodenwasser (2ᵃ) einsteht.

10. Kombinierte Vorrichtung nach dem Anspruch 9, dadurch gekennzeichnet, daß der Zusatzschaft ( △ 9ᵃ) als mindestens ein Randschaftzapfen (9ᵃ) ausgebildet ist, (je) vornehmlich mit einer Breite von 1/5 des Pflanzgefäß-Oberrand-Umfangs (9ᵇ) entsprechend.

11. Kombinierte Vorrichtung nach den Ansprüchen 9 und 10, dadurch gekennzeichnet, daß im Oberrandbereich (9ᵇ) im Randschaftzapfen-Ansatz ( △ 9ᵃ) außen eine Materialausarbeitung/Einbuchtung (9ᶜ) vorgesehen ist (zum Einfüllen von Wasser).

12. Kombinierte Vorrichtung nach einem der vorgenannten Ansprüche, dadurch gekennzeichnet, daß der Trenntopf (15) innerhalb des Außenschafts (15) bodenseits einen weiteren aufsteigenden, sowie einen dritten - wieder abfallenden - Schaft (15ᵃ) - letzterer im wasserdichten Bereich - bildet, mit mindestens einem Durchbruch (15ᶜ) im Außenringboden des kombinierten Trenntopfs (15).

13. Kombinierte Vorrichtung nach den Ansprüchen 5 und 6 sowie einem weiteren Anspruch, dadurch gekennzeichnet, daß gegenüber dem Schaftbereich mit dem kleineren Durchmesser (10ᵃ) im Außenschaft (10) dieser eine Einbuchtung erfährt über vornehmlich die gesamte Schaft-höhe (10) - daß dort der Schaft (10) des Trenntopfs (10) außen am Schaft (7) des Kapillartopfs (7) ganz und alternativ im Bodenbereich teilweise anliegt.

14. Kombinierte Vorrichtung nach den Ansprüchen 1 und 4, dadurch gekennzeichnet, daß die Wasserstandsanzeigevorrichtung (6ª -6ᶜ) in Stabteilen und alternativ als rundum laufendes Flachelement (Scheibe) ausgebildet ist - je als planes und alternativ als balliges/gekrümmtes Element - .

15. Kombinierte Vorrichtung nach dem Anspruch 1, dadurch gekennzeichnet, daß der Schwimmkörper (6b, 19ᵇ) mit Anzeiger (6ª)in länglicher/bogenförmiger Ausgestaltung mittels eines länglichen Kreis-oder Kurvenförmigen Elements - Rohr/Stab - (4ᵇ,4ᶜ,19ª) geführt ist.

16. Kombinierte Vorrichtung nach dem Anspruch 1, dadurch gekennzeichnet, daß das kapillare -innere-Pflanzgefäß (7,8,9) über den oberen Gefäßbereich (7ᶜ) mittels kapillarer Stoffe (11ª) in kapillarer Verbindung steht (7ᵉ) und dadurch insgesamt feuchtgehalten wird.

17. Kombinierte Vorrichtung gekennzeichnet durch einen Wasserfülltrichter (17) mit langem Schaft (17ª), der über einen Wasserstandsanzeiger gesteckt, im Bereich neben den Pflanzgefäßen (7/7ᶜ/7ᵉ/7ᵇ,10/10ª;8ª/8ᵇ,14;9/9ª/9ᵇ,15/15ª) untergebracht ist.

Fig. 1

0 278 010

d) 4b/4c/19a

e) 6a

6b/19b

4a 4 4b

4d ~6c

11 6d

20

4 4c 1

b) 2 6a

4 4a 6d

4b

4d

4c

6f/4e

6e 6b 6a

4c

c)

20a 8b 13 13a 4f 6b 4c 6a 4

11 6c

4d

20

16c 8a 8 14 1 2a 4a 2 4b

13b 16

a)

Fig. 2

b)

a)

Fig. 3

| | Europäisches Patentamt | EUROPÄISCHER RECHERCHENBERICHT | Nummer der Anmeldung |
|---|---|---|---|
| | | | EP 86 11 8190 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 425 393 (BLAICHER) <br> * Ansprüche 1,3-9,11,13; Abbildungen 1,4 * | 1,2 | A 01 G 27/00 |
| A | DE-A-2 447 230 (HAGEMANN) <br> * Ansprüche 1,2,5; Abbildung 2 * | 1,8,9, 12 | |
| A | US-A-4 574 631 (JOHNSON) <br> * Abbildungen 1,2; Ansprüche 1,4 * | 1,2,4, 14 | |
| A | US-A-3 757 469 (SMITH) <br> * Abbildungen 5,8; Spalte 2, Zeilen 1-40 * | 1 | |
| A,D | EP-A-0 193 495 (BLOCK) <br> * Abbildungen 1-7; Anspruch 1 * | 1 | |
| A | CH-A- 502 756 (VOGELSANGER) <br> * Abbildung 1; Spalte 2, Zeilen 14-22 * | 7 | |
| A | CH-A- 492 389 (CHAUX) <br> * Abbildungen 1,2; Spalte 1, Zeile 33 - Spalte 2, Zeile 2 * | 11 | RECHERCHIERTE SACHGEBIETE (Int. Cl.4) <br><br> A 01 G <br> G 01 F |
| A | US-A-1 585 971 (GARD) <br> * Abbildungen 1,3; Seite 1, Zeile 65 - Seite 2, Zeile 98 * | 4,14,15 | |
| A | FR-A-2 559 024 (NEGRE) <br> * Abbildung 1; Seite 1, Zeilen 26-33 * | 16 | |
| A | DE-A-3 226 719 (LENZ) <br> * Abbildung 1; Seite 8, Zeile 32 - Seite 9, Zeile 10 * | 1,17 | |

Der vorliegende Recherchenbericht wurde für alle Patentansprüche erstellt

| Recherchenort | Abschlußdatum der Recherche | Prüfer |
|---|---|---|
| DEN HAAG | 28-04-1988 | MEINDERS H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)